# EUROPEAN PATENT SPECIFICATION

(11) **EP 1 688 947 B1**
(45) Date of publication and mention of the grant of the patent: **19.10.2011**
(21) Application number: 06002162.3
(22) Date of filing: 02.02.2006
(51) Int. Cl.: G11B 20/18, G11B 20/12, G11B 7/24

(54) **Single glass substrate test disk**
Einzelglassubstrats Testplatte
Disque de test unique à substrat en verre

(30) Priority: 02.02.2005 JP 2005025969
(43) Date of publication of application: 09.08.2006
(73) Proprietor: Funai Electric Co., Ltd., Daito-shi, Osaka 574-0031 (JP)
(72) Inventor: Sogawa, Teruaki, Daito-shi Osaka 574-0013 (JP); Yoshioka, Jyouji, Daito-shi Osaka 574-0013 (JP); Ukawa, Yoshiaki, Daito-shi Osaka 574-0013 (JP); Kasahara, Takashi, Daito-shi Osaka 574-0013 (JP); Inoue, Katsuichi, Daito-shi Osaka 574-0013 (JP)
(74) Representative: Beetz & Partner

(56) References cited:
- EP-A- 1 176 587
- EP-A- 1 422 706
- US-A1- 2001 040 846
- US-A1- 2004 190 407

## Description

### l . Field of the Invention

The present invention relates to the structure of a test disc for the testing of an optical disc apparatus.

### 2. Description of Related Art

In the production line of DVD recording/playback apparatuses, during the set assembly process for assembling together a pickup and a front-end system (the part that performs servo control), test recording to a DVD is performed when their assembly is complete. If recording fails here, the assembly is judged to be defective, but it is still necessary to find out which is responsible for the failure of recording, the pickup or the front-end system. This makes it desirable to evaluate the performance of the pickup, as a recording pickup on its own, prior to the set assembly process, that is, during the mass production process of the pickup.

As test discs for use for the evaluation of pickups, DVD/CD hybrid glass discs are commercially available. However, since these test discs have the formats of DVD- or CD-ROMs, they are not completely appropriate for the evaluation of recording pickups (for test discs for playback, see, for example, JP A H9-274740). With recordable DVDs (DVD-R, DVD-RW, DVD+R, and DVD+RW), it is necessary to additionally perform wobble signal evaluation and land prepit (LPP) signal evaluation.

Accordingly, in a case where the signal evaluation of a pickup with respect to recordable DVDs is incorporated in the mass production process of the pickup, one way of performing the signal evaluation is by using commercially available test discs that use polycarbonate as their substrate and that have formats complying with various recordable DVD standards. On the other hand, for example, JP A H7-93829 discloses, as a test disc, an optical disc in which preformat pits are formed at locations intentionally displaced from the center of a land or groove.

Inconveniently, when the commercially available test discs mentioned above are used to perform signal evaluation with respect to DVD- family discs (DVD-R and DVD-RW) and DVD+ family discs (DVD+R and DVD+RW), it takes much time to change the test discs. If, in addition, the tolerance of a pickup against low-quality discs, which have been an issue in the market of recordable DVDs, needs to be checked, it takes still more time to change discs. This lowers the efficiency of testing. On the other hand, when the optical disc disclosed in JP A H7-93829 mentioned above is used as a test disc, it is possible to check the tolerance of a pickup against low-quality DVD- family discs, which have land prepits, but it is not possible to perform signal evaluation with respect to DVD+ discs. Thus, this again lowers the efficiency of testing.

There also are the following inconveniences. Test discs using polycarbonate substrates tend to develop a warp. This makes them unreliable for use for signal evaluation. Test discs using polycarbonate substrates also tend to suffer scratches and thus have shorter lifetimes. This make them disadvantageous in terms of cost. Test discs that use organic colorant film in their recording layers, like append-only DVDs (DVD-R and DVD+R), are prone to secular changes in properties. This makes them unreliable for use for signal evaluation.
Furthermore, discs are known from the prior art having test areas and count areas for calibrating the power of a data-recording laser beam, as disclosed for example in US 2001/0040846 Al. From EP 1 176 587 A2 discs are known having a plurality of areas and meanderingly formed recording tracks in order to prevent illegal copying.

An object of the present invention is to provide a test disc that dramatically enhances the efficiency of the testing of a pickup for recording to a DVD.

To achieve the above object, according to the present invention, a test disc is provided having the features of claim 1. The test disc has: a first area in which a recorded region and an unrecorded region are provided; a second area in which a recorded region and an unrecorded region are provided; a third area in which at least one region is provided in which the wobble frequency is varied from 140 kHz; a fourth area in which at least one region is provided in which the wobble frequency is varied from 817 kHz; a fifth area in which at least one region is provided in which the wobble phase difference is varied from 180 degrees; a sixth area in which regions are provided between which the directions of the land prepits formed therein as observed within the land surface are mutually different; and a seventh area in which regions are provided between which the lengths of the land prepits formed therein as observed along the direction of the tracks are mutually different. Here, the first, third, sixth, and seventh areas are used for signal evaluation with respect to a DVD- family disc, and the second, fourth, and fifth areas are used for signal evaluation with respect to a DVD+ family disc.

With this structure, it is possible to perform, with a single disc, the signal evaluation of a pickup with respect to DVD- family discs and DVD+ family discs and the checking of the tolerance of the pickup against low-precision recordable DVDs such as low-quality discs. Thus, it is possible to dramatically enhance the efficiency of the testing of a pickup for recording to a DVD.

According to the present invention, preferably, the test disc structured as described above further has a substrate; moreover, the first, second, third, fourth, fifth, sixth, and seventh areas are formed on the substrate; and furthermore, the recorded regions are where pits are formed and the unrecorded regions are where no pits are formed.

With this structure, pits are formed on the substrate. This eliminates the need for a recording layer, and thus eliminates the concern about secular changes in properties as described previously.

According to the present invention, preferably, the substrate is formed of glass. This makes the disc free from a warp, reliable for use for signal evaluation, and resistant to scratches. Thus, the disc provides a longer lifetime, and proves advantageous in terms of cost.

### BRIEF DESCRIPTION OF THE DRAWINGS

Fig. 1 is a sectional view of part of the glass substrate provided in a test disc according to the present invention;

Fig. 2 is a diagram showing an example of the layout of different areas in the direction of the radius of the test disc according to the present invention;

Fig. 3 is a diagram showing an example of land prepits formed to point in different directions within the land surface;

Fig. 4 is a diagram showing an example of land prepits formed to be differently long in the direction of the tracks; and

Fig. 5 is a flow chart showing the procedure for testing a pickup by the use of the test disc according to the present invention.

### DETAILED DESCRIPTION OF PREFERRED EMBODIMENTS

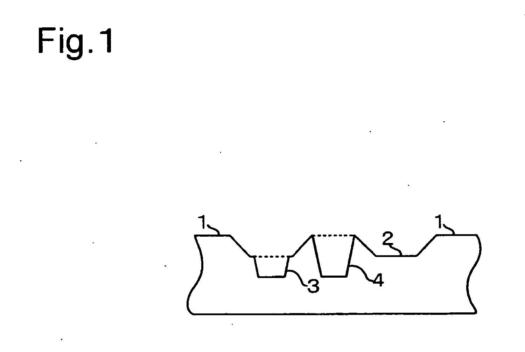

Hereinafter, an example of the structure of a test disc according to the present invention will be described. Fig. 1 is a sectional view of part of the glass substrate provided in the test disc according to the present invention. As shown in Fig. 1, on a glass substrate, there are formed lands 1, grooves 2, pits 3 (formed in the grooves 2), and land prepits 4 (for DVD- family discs only). The grooves 2 meander slightly in the direction of the radius of the disc, producing wobbles. If the laser wavelength is λ, the grooves 2 are formed to have a depth of λ / 8, the pits 3 a depth of λ / 8, and the land prepits 4 a depth of λ / 4. On top of the glass substrate, there are laid, though omitted from illustration, a reflective layer and a protective layer. Here, no recording layer is needed. Typically, the reflective layer is formed of gold, silver, or the like, and the protective layer is formed of polycarbonate or the like.

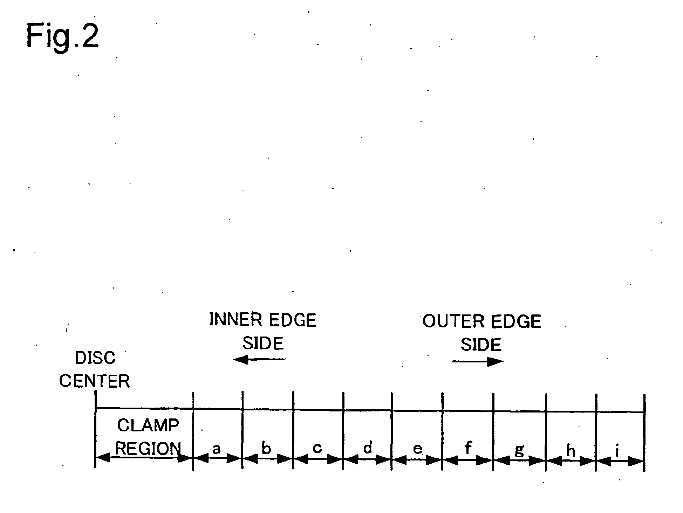

Fig. 2 shows an example of the layout of different areas in the direction of the radius of the test disc according to the present invention. From the clamp region located at the innermost edge of the disc toward the outer edge thereof, there are formed areas "a" to "i". Area "a" has the format of a DVD-ROM, and has a trail of pits formed on the glass substrate.

Areas "b", "d", "g", and "h" are regions used for signal evaluation with respect to DVD- family discs, and areas "c", "e", and "f" are regions used for signal evaluation with respect to DVD+ family discs.

In area "b", there are provided a recorded region and an unrecorded region. In the DVD- family format, wobbles are formed in the grooves, and land prepits are formed on the lands. The land prepits form address information. In the recorded region, the pits 3 are formed in the grooves 2 (Fig. 1). For example, from the inner edge of area "b", there are formed a recorded region and then an unrecorded region. This makes it possible to perform signal evaluation in the land prepits and the wobbles with and without recording, and also to perform decoding evaluation in the land prepits.

In area "c", there are provided a recorded region and an unrecorded region. In the DVD+ family format, wobbles are formed in the grooves (at a higher frequency than in the DVD- family format), and no land prepits are formed. The wobbles are formed in two types, 180 degrees out of phase with each other, and these two types of wobbles are combined to form address information called ADIP. In the recorded region, the pits 3 are formed in the grooves 2 (Fig. 1). For example, from the inner edge of area "c", there are formed a recorded region and then an unrecorded region. This makes it possible to perform signal evaluation in the wobbles, and also to perform decoding evaluation in the ADIP.

Area "d" is where there is provided at least one region where the wobble frequency is varied from 140 kHz, which is the DVD- family standard value. For example, from the center edge of area "d", there are formed a region where the wobble frequency is 140+α kHz and then a region where the wobble frequency is 140-β kHz. The values of α and β are determined on the basis of the limit values of the wobble frequency within which a disc is evaluated as meeting its standard, and on the basis of information on low-quality discs, which have been an issue in the market. This makes it possible to check the tolerance of the decoding of land prepits.

Area "e" is where there is provided at least one region where the wobble frequency is varied from 817 kHz, which is the DVD+ family standard value. For example, from the center edge of area "e", a region where the wobble frequency is 817+α kHz and a region where the wobble frequency is 817-β kHz are formed in this order. The values of α and β are determined on the basis of the limit values of the wobble frequency within which a disc is evaluated as meeting its standard, and on the basis of information on low-quality discs, which have been an issue in the market. This makes it possible to check the tolerance of the decoding of ADIP.

Area "f" is where there is provided at least one region where the wobble phase difference is varied from 180 degrees, which is the DVD+ family standard value. For example, from the center edge of area "f", a region where the wobble phase difference is 180+θ degrees and a region where the wobble phase difference is 180-δ degrees are formed in this order. The values of θ and δ are determined on the basis of the limit values of the wobble phase difference within which a disc is evaluated as meeting its standard, and on the basis of information on low-quality discs, which have been an issue in the market. This makes it possible to check the tolerance of the decoding of ADIP.

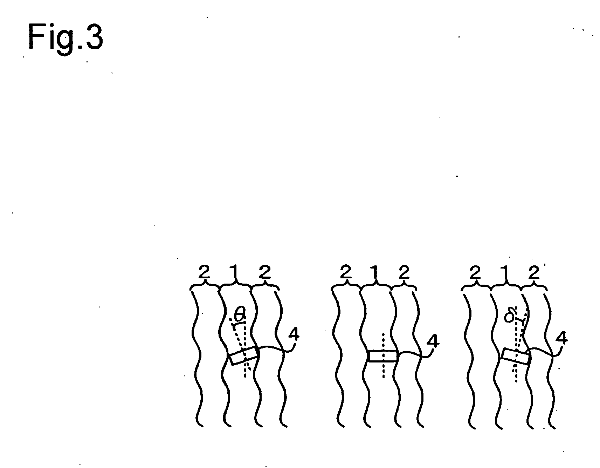

Area "g" is where there are provided regions between which the directions of the land prepits formed therein as observed within the land surface are mutually different. For example, as shown in Fig. 3, from the inner edge of area "g", there are formed a region where the center line of land prepits is rotated so as to be inclined at θ degrees relative to the direction of tracks and then a region where the center line of land prepits is rotated so as to be inclined at -δ degrees relative to the direction of tracks. The values of θ and δ are determined on the basis of the limit values of the land prepit direction within which a disc is evaluated as meeting its standard, and on the basis of information on low-quality discs, which have been an issue in the market. This makes it possible to check the tolerance of the decoding of land prepits.

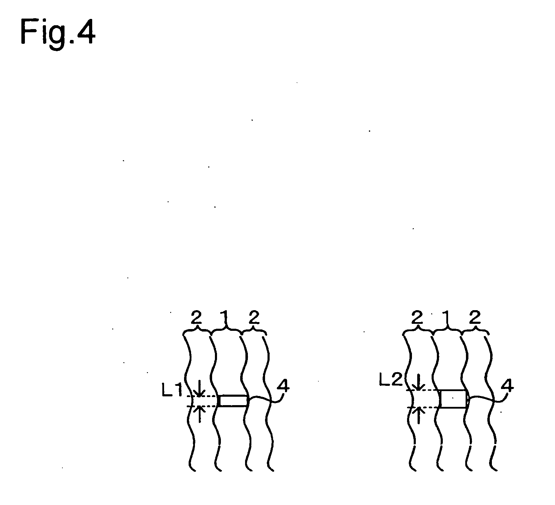

Area "h" is where there are provided regions between which the lengths of the land prepits formed therein as observed in the direction of the tracks are mutually different. For example, as shown in Fig. 4, from the inner edge of area "h", there are formed a region where the length of land prepits in the direction of the tracks equals L1 and then a region where the length of land prepits in the direction of the tracks equals L2 (> L1). The values of L1 and L2 are determined on the basis of the limit values of the track-direction land prepit length within which a disc is evaluated as meeting its standard, and on the basis of information on low-quality discs, which have been an issue in the market. This makes it possible to check the tolerance of the decoding of land prepits.

Area "i" has the format of a CD-ROM, and has a trail of pits formed on the glass substrate.

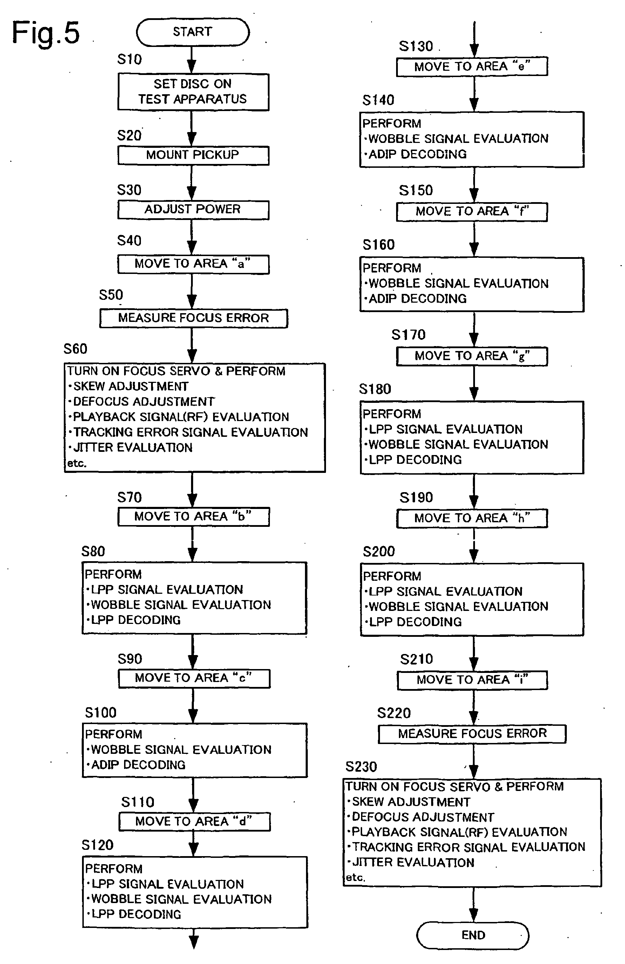

Now, the procedure for testing a pickup by the use of the test disc according to the present invention described above will be described with reference to the flow chart in Fig. 5.

First, in step S10, the test disc is loaded in a test apparatus. The test apparatus may be any conventionally know one for use for the development of pickups. Then, in step S20, a pickup is mounted on the test apparatus.

In step S30, the test apparatus adjusts the power of laser, and then, in step S40, the pickup moves to area "a". In step S50, the focus error is measured. Then, in step S60, the focus servo is turned on, and skew adjustment and the like are performed.

In step S70, the pickup moves to area "b". In step S80, on the basis of the light reflected from the test disc, whether or not the levels of the amplitudes of the land prepit signal and of the wobble signal meet the standard is checked. In addition, the results of the decoding of land prepits are checked.

In step S90, the pickup moves to area "c". In step S100, on the basis of the light reflected from the test disc, whether or not the level of the amplitude of the wobble signal meets the standard is checked. In addition, the results of the decoding of ADIP are checked.

Subsequently, in steps S110 two S200, testing is performed in similar manners in areas "d" to "h". Specifically, in the areas directed to DVD- family, the levels of the amplitudes of the land prepit signal and the wobble signal and the results of the decoding of land prepits are checked, and, in the areas directed to DVD+ family, the level of the amplitude of the wobble signal and results of the decoding of ADIP are checked.

Next, in step S210, the pickup moves to area "i". In step S220, the focus error is measured. In step S230, the focus servo is turned on, and skew adjustment and the like are performed. Now, the testing is complete.

In the above description, the test disc according to the present invention has been described as having a substrate formed of glass and having no recording layer. It is, however, also possible to form one as a disc, like commercially available recordable DVDs, having a substrate formed of polycarbonate and having a recording layer of organic colorant film or phase change film. In that case, for example, in the recorded regions of areas "b" and "c", if the recording layer is organic colorant film, recording marks are formed by deforming parts of the recording layer, the substrate, and the reflective layer, and, if the recording layer is phase change film, recording marks are formed by making parts of the recording layer amorphous. Also with the test disc so structured, it is possible to dramatically enhance the efficiency of the testing of a pickup.

## Claims

1. A test disc comprising:
a first area in which a recorded region and an unrecorded region are provided;
a second area in which a recorded region and an unrecorded region are provided;
a third area in which at least one region is provided in which a wobble frequency is varied so as to include a predetermined deviation from 140 kHz for the evaluation of the performance of a pickup as observed when an actual wobble frequency includes an erroneous deviation from a standard value of 140 kHz;
a fourth area in which at least one region is provided in which a wobble frequency is varied so as to include a predetermined deviation from 817 kHz for the evaluation of the performance of a pickup as observed when an actual wobble frequency includes an erroneous deviation from a standard value of 817 kHz;
a fifth area in which at least one region is provided in which a wobble phase difference is varied so as to include a predetermined deviation from 180 degrees for the evaluation of the performance of a pickup as observed when an actual wobble phase difference includes an erroneous deviation from a standard value of 180 degrees;
a sixth area in which regions are provided between which directions of land prepits formed therein as observed within a land surface are mutually different; and
a seventh area in which regions are provided between which lengths of land prepits formed therein as observed along a direction of tracks are mutually different,
wherein the first, third, sixth, and seventh areas are used for signal evaluation with respect to a DVD- family disc, and
wherein the second, fourth, and fifth areas are used for signal evaluation with respect to a DVD+ family disc.

2. The test disc of claim 1, further comprising:
a substrate,
wherein the first, second, third, fourth, fifth, sixth, and seventh areas are formed on the substrate, and
wherein the recorded regions are where pits are formed and the unrecorded regions are where no pits are formed.

3. The test disc of claim 2, wherein the substrate is formed of glass.

4. The test disc of claim 2 or 3, further comprising:a reflective layer.

## Patentansprüche

1. Test-Disk, umfassend:
einen ersten Bereich, in welchem ein Bereich mit Aufzeichnung und ein Bereich ohne Aufzeichnung vorgesehen sind;
einen zweiten Bereich, in welchem ein Bereich mit Aufzeichnung und ein Bereich ohne Aufzeichnung vorgesehen sind;
einen dritten Bereich, in welchem zumindest ein Bereich vorgesehen ist, in welchem eine Plattenlaufabweichungsfrequenz verändert wird, sodass zur Bewertung der Leistung eines Aufnahmekopfs eine vorgegebene Abweichung von 140 kHz enthalten ist, wie sie beobachtet wird, wenn eine tatsächliche Plattenlaufabweichungsfrequenz eine fehlerbedingte Abweichung von einem Standardwert von 140 kHz enthält;
einen vierten Bereich, in welchem zumindest ein Bereich vorgesehen ist, in welchem die Plattenlaufabweichungsfrequenz so verändert wird, dass sie eine vorgegebene Abweichung von 817 kH für die Bewertung der Leistung eines Lesekopfs enthält, wie sie beobachtet wird, wenn eine tatsächliche Plattenlaufabweichungsfrequenz eine fehlerbedingte Abweichung von einem Standardwert von 817 kH enthält;
einen fünften Bereich, in welchem wenigstens ein Bereich vorgesehen ist, in welchem eine Phasendifferenz der Plattenlaufabweichung so variiert wird,
dass sie eine vorgegebene Abweichung von 180° enthält, um die Leistung eines Lesekopfs zu bewerten, wie sie beobachtet wird, wenn eine tatsächliche Phasendifferenz der Plattenlaufabweichung eine fehlerbedingte Abweichung von einem Standardwert von 180° enthält;
einen sechsten Bereich, in welchem Bereiche vorgesehen sind, zwischen welchen Richtungen von Land-Vorpits, die darin ausgebildet sind und die innerhalb einer Land-Oberfläche beobachtet werden können, sich voneinander unterscheiden; und
einen siebten Bereich, in welchem Bereiche vorgesehen sind, zwischen welchen sich die Längen von Land-Vorpits, die darin ausgebildet sind und die entlang der Spurrichtung beobachtet werden können, voneinander unterscheiden,
wobei der erste, dritte, sechste und siebte Bereich zur Signalauswertung bezogen auf eine Disk der DVD-Familie verwendet werden und
wobei der zweite, vierte und fünfte Bereich für die Signalauswertung bezüglich einer Disk aus der DVD+-Familie verwendet werden.

2. Test-Disk nach Anspruch 1, ferner umfassend:
ein Substrat,
wobei der erste, zweite, dritte, vierte, fünfte, sechste und siebte Bereich auf dem Substrat gebildet sind, und
wobei die Bereiche mit Aufzeichnungen diejenigen sind, in welchen Pits ausgebildet sind und die Bereiche ohne Aufzeichnungen diejenigen sind, in welchen keine Pits ausgebildet sind.

3. Test-Disk nach Anspruch 2, wobei das Substrat aus Glas gebildet ist.

4. Test-Disk nach Anspruch 2 oder 3, ferner umfassend eine reflektive Schicht.

## Revendications

1. Disque de test comprenant :
une première zone sur laquelle sont fournies une région enregistrée et une région non enregistrée ;
une deuxième zone sur laquelle sont fournies une région enregistrée et une région non enregistrée ;
une troisième zone sur laquelle est fournie au moins une région dans laquelle une fréquence d'oscillation varie de manière à inclure un écart déterminé au préalable par rapport à une valeur de 140 kHz pour l'évaluation des performances d'un lecteur telles qu'observées lorsqu'une fréquence d'oscillation réelle inclut un écart erroné par rapport à une valeur standard de 140 kKz ;
une quatrième zone sur laquelle est fournie au moins une région dans laquelle une fréquence d'oscillation varie de manière à inclure un écart déterminé au préalable par rapport à une valeur de 817 kHz pour l'évaluation des performances d'un lecteur telles qu'observées lorsqu'une fréquence d'oscillation réelle inclut un écart erroné par rapport à une valeur standard de 817 kHz ;
une cinquième zone sur laquelle est fournie au moins une région dans laquelle une différence de phase d'oscillation varie de manière à inclure un écart déterminé au préalable par rapport à une valeur de 180 degrés pour l'évaluation des performances d'un lecteur telles qu'observées lorsqu'une différence de phase d'oscillation réelle inclut un écart erroné par rapport à une valeur standard de 180 degrés ;
une sixième zone sur laquelle sont fournies des régions entre lesquelles les directions des pré-cuvettes de méplat formées dans lesdites régions telles qu'observées à l'intérieur d'une surface de méplat sont différentes les unes des autres ;
une septième zone sur laquelle sont fournies des régions entre lesquelles les longueurs des pré-cuvettes de méplat formées dans lesdites régions telles qu'observées le long des pistes sont différentes les unes des autres ;
dans lequel les première, troisième, sixième et septième zones sont utilisées pour l'évaluation des signaux en ce qui concerne les disques de la famille des DVD, et
les deuxième, quatrième et cinquième zones sont utilisées pour l'évaluation des signaux en ce qui concerne les disques de la famille des DVD+.

2. Le disque de test de la revendication 1, comprenant en outre :
un substrat,
dans lequel les première, deuxième, troisième, quatrième, cinquième, sixième et septième zones sont formées sur le substrat,
et
dans lequel les régions enregistrées se situent là où les cuvettes sont formées et les régions non enregistrées se situent là où aucune cuvette n'est formée.

3. Le disque de test de la revendication 2, dans lequel le substrat est constitué de verre.

4. le disque de test de la revendication 2 ou 3, comprenant en outre une couche réfléchissante.
